# EUROPÄISCHE PATENTANMELDUNG

(11) **EP 4 474 129 A1**
(43) Veröffentlichungstag der Anmeldung: **11.12.2024**
(21) Anmeldenummer: 23178231.9
(22) Anmeldetag: 08.06.2023
(51) Int. Cl.: B29C 48/09, B29C 48/12

(54) **VORRICHTUNG UND VERFAHREN ZUM ÜBERPRÜFEN DER EINSTELLUNG EINER EXTRUSIONSVORRICHTUNG**

(71) Anmelder: SIKORA AG, 28307 Bremen (DE)
(72) Erfinder: SCHUH, Kolja Tobias, 28307 Bremen (DE); SIKORA, Harald, 28357 Bremen (DE)
(74) Vertreter: Hauck Patentanwaltspartnerschaft mbB

(57) **Zusammenfassung**

Die Erfindung betrifft eine Vorrichtung zum Überprüfen der Einstellung einer einen in einer Förderrichtung geförderten rohrförmigen Gegenstand erzeugenden Extrusionsvorrichtung, wobei die Extrusionsvorrichtung so eingestellt ist, dass extrudiertes Material mit unterschiedlichen Austrittsweiten an einer Oberseite und an einer Unterseite einer Extrusionsdüse der Extrusionsvorrichtung austritt. Die Erfindung betrifft außerdem ein entsprechendes Verfahren.

## Beschreibung

Die Erfindung betrifft eine Vorrichtung und ein Verfahren zum Überprüfen der Einstellung einer einen in einer Förderrichtung geförderten rohrförmigen Gegenstand erzeugenden Extrusionsvorrichtung.

Beispielsweise Kunststoffrohre für die Versorgung von Wohn- und Industriegebieten mit Gas und Wasser, aber auch zur Entwässerung, werden überwiegend aus Materialien wie HDPE, PP und PVC hergestellt. Typische Rohrdurchmesser betragen bis zu 3 m, mit Wanddicken bis zu 250 mm. Die Herstellung erfolgt üblicherweise in Extrusionsvorrichtungen, in denen ein Kunststoffrohmaterial aufgeschmolzen und durch eine üblicherweise ringförmige Extrusionsdüse ausgebracht wird. Das auf diese Weise extrudierte Rohr wird in Längsrichtung von der Extrusionsvorrichtung abgezogen und somit gefördert. Der Durchmesser des abgezogenen Rohrs wird in einer nachgeschalteten zum Beispiel hülsenförmigen Kalibriervorrichtung auf den gewünschten Außendurchmesser geformt. Im Zuge der Förderung durchläuft das Rohr in der Regel mehrere Kühlstrecken, in denen eine Kühlung des Rohrs und somit eine sukzessive Verfestigung der anfangs noch fließfähigen Kunststoffschmelze erfolgt. In einer ersten Kühlstrecke wird das geformte Rohr zum Beispiel mit Vakuum daran gehindert, zusammenzufallen. Die Kühlung des Rohrs in den Kühlstrecken erfolgt häufig durch eine Kühlflüssigkeit, wie Wasser. Das Kühlwasser umspült das Rohr und festigt schnell dessen äußeren Bereich. Nach Austritt aus der ersten Kühlstrecke ist die Außenfläche des Rohrs also in der Regel erstarrt, sodass die Außengeometrie des Rohrs sich nachfolgend im Wesentlichen nur noch geringfügig verändert. Im Inneren der Rohrwandung befinden sich nach Austritt aus der ersten Kühlstrecke jedoch regelmäßig noch fließfähige Anteile des Rohrmaterials. Im weiteren Verlauf des Förderns des rohrförmigen Gegenstands kommt es insbesondere im Zuge des Durchlaufens weiterer Kühlstrecken sukzessive zu einer Erkaltung und damit Erstarrung auch des Rohrinneren bis zur Innenfläche des Rohrs. Mit Hilfe einer fliegenden Säge wird das Rohr schließlich auf das gewünschte Längenmaß abgelängt.

Die Formgebung des Rohrs im Zuge der vollständigen Erstarrung nach Austritt aus der Extrusionsvorrichtung wird im Wesentlichen durch zwei Effekte beeinflusst, die für das Ziel des Erreichens einer zum Beispiel möglichst einheitlichen Wanddicke des Rohrs zu berücksichtigen sind. Zum einen ist dies eine im Zuge der Erkaltung erfolgende Schrumpfung des Rohrmaterials. Zum anderen ist dies ein Sagging, also ein Absacken der noch fließfähigen viskosen Masseanteile während des Erstarrens durch den Einfluss der Schwerkraft.

Als Reaktion auf diese, die endgültige Geometrie des rohrförmigen Gegenstands beeinflussenden Effekte ist es bekannt, die Extrusionsdüse der Extrusionsvorrichtung in einem oberen Bereich mit einer größeren Austrittsweite für extrudiertes Material einzustellen als in einem unteren Bereich. Zum Einstellen der Austrittsweiten kann ein Austrittsspalt der Extrusionsdüse im oberen Bereich weiter eingestellt werden als in einem unteren Bereich. Alternativ oder zusätzlich kann die Extrusionsdüse in einem oberen Bereich stärker beheizt werden als in einem unteren Bereich und dadurch eine größere Austrittsweite des extrudierten Materials im oberen Bereich als im unteren Bereich der Extrusionsdüse realisiert werden. Durch beide Maßnahmen wird also erreicht, dass im oberen Bereich der Extrusionsdüse mehr Material austritt als im unteren Bereich. Durch diese absichtlich asymmetrische Ausbringung des Materials soll Sagging kompensiert werden, sodass das erstarrte Rohr eine möglichst gleichbleibende Wanddicke über seinen gesamten Umfang aufweist.

Wichtige Geometriewerte des Rohrs, wie Wanddicke und Durchmesser, können abschließend erst nach vollständiger Erstarrung gemessen werden, also am Ende sämtlicher Kühlstrecken des Rohrs, wenn die Schrumpfung und das Sagging vollständig abgeschlossen sind. Eine typische Ausstoßleistung einer Extrusionsvorrichtung beträgt für mittlere Rohrquerschnitte etwa 1.000 kg/h. Die Austrittstemperatur der Schmelze aus der Extrusionsdüse liegt materialabhängig etwa im Bereich von 200°C bis 240°C. Für ein Rohr mit beispielsweise 330 mm Außendurchmesser und 30 mm Wanddicke und einer typischen Kühlstrecke für das Rohr von 60 m liegen erste Messergebnisse bezüglich der Wanddicke und des Durchmessers oftmals erst Stunden nach Produktionsbeginn vor. Erst dann kann bei Feststellung von Geometrieabweichungen von Sollwerten Einfluss auf die Produktionsparameter der Extrusionsvorrichtung genommen werden, wobei sich vorgenommene Veränderungen wiederum erst nach mehreren Stunden erneut überprüfen lassen. Oftmals erforderliche mehrere Korrekturen bis zu einem optimalen Prozess nach einem Prozessstart benötigen mehrere Tage, um zum Beispiel die Wanddicke gleichförmig über den Umfang und auf dessen Nennwert einzustellen.

Um das Sagging zu kompensieren, wird wie erläutert bei der Einstellung der Extrusionsdüse die Austrittsweite bzw. Wanddicke des extrudierten Materials im oberen Bereich größer als im unteren Bereich eingestellt. Um jedenfalls eine minimale Wanddicke auch bei Auftreten von Sagging nicht zu unterschreiten, erfolgt in der Regel eine Überkompensation des Saggings, wobei Erfahrungswerte genutzt werden. Letztlich führt dies dazu, dass unnötig viel Material ausgetragen wird.

Es ist folglich wünschenswert, möglichst frühzeitig eine Aussage über die zu erwartende Schrumpfung und das zu erwartende Sagging eines in einer Extrusionsvorrichtung erzeugten Rohrs zu erhalten. Eine Messung zum Beispiel der Wanddicke und des Durchmessers eines Rohrs nach der ersten Kühlstrecke kann nicht den gewünschten finalen Werten entsprechen, die nach der vollständigen Erkaltung des Rohrs vorzufinden wären, weil an dieser Stelle die Wandung des Rohrs nur im äußeren Bereich gefestigtes Material aufweist und im Inneren noch rekristallisierende Anteile und Schmelze aufweist. Daraus folgt, dass an einer Messposition nach einer ersten Kühlstrecke Durchmesser- und Wanddickenwerte erfasst werden, die noch einer Schrumpfung und einem Sagging unterliegen. Zur Beschleunigung des Anfahrprozesses und der weiteren kontinuierlichen Sicherung der Nennwerte ist eine möglichst frühe Vorhersage der zu erwartenden Schrumpfungs- und Sagging-Werte von großer wirtschaftlicher Bedeutung.

Aus DE 40 18 051 A1 ist eine Vorrichtung zur Regelung des Außendurchmessers eines Strangs, insbesondere eines Kabels, bekannt, bei der eine erste Durchmesser-Messvorrichtung hinter einem Extruder und eine zweite Durchmesser-Messvorrichtung im Abstand zum Extruder, vorzugsweise hinter einer Kühlstrecke für den Strang, angeordnet sind. Ein Durchmesser-Messsignal der ersten Durchmesser-Messvorrichtung wird auf eine erste Vergleichsvorrichtung sowie auf eine Verzögerungsstufe gegeben, deren Verzögerungszeit der Zeit entspricht, die der Strang zwischen der ersten und der zweiten Durchmesser-Messvorrichtung zurücklegt. Eine zweite Vergleichsvorrichtung vergleicht das Durchmesser-Messsignal der zweiten Durchmesser-Messvorrichtung mit dem verzögerten ersten Durchmesser-Messsignal. Das Differenzsignal der zweiten Vergleichsrichtung wird neben einem Kaltsollwert des Durchmessers auf die erste Vergleichsvorrichtung gegeben. Wird durch die erste Vergleichsvorrichtung eine Abweichung von dem Kaltsollwert festgestellt, so wird die Abweichung einem Regler zugeführt zur Regelung des Außendurchmessers des Strangs. Mit der in DE 40 18 051 A1 beschriebenen Vorrichtung kann die Schrumpfung des Strangs zwischen den Messpositionen der ersten und zweiten Durchmesser-Messvorrichtung gemessen werden, wobei durch die Verzögerung sichergestellt wird, dass die tatsächliche Schrumpfung des Strangs gemessen wird.

In WO 2022/058081 A1 wird ein Verfahren zum Bestimmen von Geometrieparametern eines strang- oder plattenförmigen Gegenstands vorgeschlagen, mit dem die Schrumpfung vorhergesagt wird. Dazu wird in einem Ermittlungsschritt ein Zusammenhang zwischen dem Brechungsindex des Gegenstands und einer bei seiner Verfestigung erfolgenden Schrumpfung ermittelt. In einem Bestimmungsschritt werden der Brechungsindex und mindestens ein Geometrieparameter des noch nicht vollständig verfestigten Gegenstands bestimmt, insbesondere nach einer ersten Kühlstrecke des Gegenstands, und aus den bestimmten Werten wird unter Berücksichtigung des im Ermittlungsschritt ermittelten Zusammenhangs ein Geometrieparameter im vollständig verfestigten Zustand des Gegenstands berechnet. Es erfolgt also eine Vorhersage der Schrumpfung des Materials des Gegenstands im Zuge seiner Verfestigung und auf dieser Grundlage eine Berechnung eines Geometrieparameters, wie beispielsweise einer Wanddicke, im vollständig verfestigten Zustand des Gegenstands.

Mit den erläuterten Verfahren lässt sich die Schrumpfung als einer der beiden, maßgeblichen Einfluss auf die endgültige Geometrie ausübenden Effekte zuverlässig vorhersagen und berücksichtigen, wobei die Messwerte vorteilhaft bereits kurz nach Austritt des Materials aus der Extrusionsvorrichtung vorliegen und der endgültige Geometrieparameter entsprechend frühzeitig zur Vermeidung von Ausschuss berechnet werden kann. Das Sagging als zweiter maßgeblicher Effekt für die endgültige Geometrie des Gegenstands kann mit den bekannten Verfahren aus nachstehend noch näher erläuterten Gründen hingegen nicht vorhergesagt werden.

Ein Verfahren zum Ermitteln des aufgetretenen Saggings eines in einer Extrusionsvorrichtung extrudierten Rohrs ist bekannt aus WO 2022/106180 A1. Dabei wird die Wanddicke des Rohrs über den Umfang des Rohrs gemessen und aus den gemessenen Wanddicken ein Wanddickenverlauf über den Umfang des Rohrs erstellt. Aus der Frequenz und/oder der Amplitude des erstellten Wanddickenverlaufs wird ein Absacken der Schmelze (Sagging) ermittelt. Während dieses Verfahren eine zuverlässige Detektion des Saggings ermöglicht, ist eine Vorhersage des Saggings auch mit diesem Verfahren nicht möglich.

Aus EP 2 086 744 B 1 ist weiterhin ein Verfahren zum Betrieb einer Produktionsanlage zur Herstellung eines Strangs bekannt, bei dem ein Extrudermodell eines Extruders in einem Rechner gespeichert wird. Bei Produktionsbeginn des Strangs wird mithilfe des Extrudermodells der vom Extruder vorhersehbar erzeugte Wert für Durchmesser und/oder Wanddicke des Strangs errechnet in Abhängigkeit von den Werten für den Innendurchmesser, die Liniengeschwindigkeit, die Schneckendrehzahl des Extruders und den drehzahlabhängigen Daten für die Ausstoßleistung des Extruders. Der errechnete Wert für Durchmesser und/oder Wanddicke wird angezeigt und durch eine Änderung der Schneckendrehzahl des Extruders und/oder der Liniengeschwindigkeit mittels Handbetätigung oder Regelung wird der errechnete und angezeigte Wert für Durchmesser und/oder Wanddicke auf einen Sollwert für Durchmesser und/oder Wanddicke gebracht. In einem Abstand von dem Extruder, an einem Messort, an dem der Strang die Kühlstrecke zum Abkühlen vollständig durchlaufen hat, wird mit einem Messkopf der Durchmesser und/oder die Wanddicke des Strangs gemessen. Aufgrund des Extrudermodells liegt der von dem Messkopf gemessene tatsächliche Wert für Durchmesser und/oder Wanddicke bereits sehr nah am jeweiligen Sollwert. Eine gegebenenfalls noch vorhandene Abweichung kann durch eine entsprechende Ansteuerung des Extruders eliminiert werden. Das in EP 2 086 744 B1 beschriebene Verfahren arbeitet so, als wäre zwischen Extruder und Kühlstrecke ein (virtueller) Messkopf angeordnet, der bereits zu diesem frühen Zeitpunkt der Produktion die Kaltwerte für Durchmesser und/oder Wanddicke des Strangs anzeigt. Durch das beschriebene Verfahren kann die Produktionsanlage bereits sehr frühzeitig, insbesondere vor Erreichen des Messkopfs durch den Strang, auf Werte eingestellt werden, die Ausschuss vermeiden. Das Erstellen des Extrudermodells ist allerdings mit einigem Aufwand verbunden und muss bei Veränderungen an den Komponenten der Produktionsanlage angepasst werden, wozu häufig umfangreiche empirische Versuche durchgeführt werden müssen.

Ausgehend von dem erläuterten Stand der Technik liegt der Erfindung die Aufgabe zugrunde, eine Vorrichtung und ein Verfahren der eingangs genannten Art bereitzustellen, mit denen insbesondere unter Berücksichtigung des Saggings eines in einer Extrusionsvorrichtung erzeugten rohrförmigen Gegenstands die Einstellung der Extrusionsvorrichtung zuverlässig überprüft und gegebenenfalls korrigiert werden kann.

Die Erfindung löst die Aufgabe durch die unabhängigen Ansprüche 1 und 16. Vorteilhafte Ausgestaltungen finden sich in den abhängigen Ansprüchen, der Beschreibung und den Figuren.

Für eine Vorrichtung der eingangs genannten Art löst die Erfindung die Aufgabe durch:
- eine erste Wanddickenmesseinrichtung zum Messen der Wanddicke mindestens einer Wand des rohrförmigen Gegenstands an einer in Förderrichtung stromauf zumindest einer Kühlstrecke für den rohrförmigen Gegenstand angeordneten ersten Messposition,
- eine zweite Wanddickenmesseinrichtung zum Messen der Wanddicke der mindestens einen Wand des rohrförmigen Gegenstands an einer in Förderrichtung stromab der ersten Messposition angeordneten zweiten Messposition,
- eine Auswerteeinrichtung, an der Wanddickenmesswerte der ersten Wanddickenmesseinrichtung und Wanddickenmesswerte der zweiten Wanddickenmesseinrichtung anliegen, wobei die Wanddickenmesswerte der ersten Wanddickenmesseinrichtung gegenüber den Wanddickenmesswerten der zweiten Wanddickenmesseinrichtung durch eine Verzögerungsstufe der Vorrichtung verzögert sind, deren Verzögerungszeit der Förderzeit des Gegenstands zwischen der ersten und zweiten Messposition entspricht,
- wobei die Auswerteeinrichtung dazu ausgebildet ist, das Verhältnis der an der Extrusionsvorrichtung eingestellten Austrittsweiten des extrudierten Materials an der Oberseite und an der Unterseite der Extrusionsdüse anhand eines Vergleichs der durch die Verzögerungsstufe verzögerten Wanddickenmesswerte der ersten Wanddickenmesseinrichtung mit den Wanddickenmesswerten der zweiten Wanddickenmesseinrichtung zu überprüfen.

Die Erfindung löst die Aufgabe außerdem durch ein Verfahren der eingangs genannten Art unter Verwendung einer erfindungsgemäßen Vorrichtung.

Mit der Erfindung kann die Einstellung einer einen rohrförmigen Gegenstand erzeugenden Extrusionsvorrichtung, wie nachfolgend erläutert insbesondere auch unter Berücksichtigung des nachfolgend zu der ersten Messposition noch zu erwartenden Saggings, also dem Absacken der noch fließfähigen, viskosen Masseanteile des aus der Extrusionsvorrichtung austretenden rohrförmigen Gegenstands während des Erstarrens durch den Einfluss der Schwerkraft, überprüft und gegebenenfalls korrigiert werden.

Die Extrusionsvorrichtung weist in an sich bekannter Weise eine beispielsweise kreisringförmige Extrusionsdüse auf, aus der das zuvor aufgeschmolzene Kunststoffmaterial austritt. In ebenfalls an sich bekannter Weise durchläuft der rohrförmige Gegenstand nachfolgend zu dem Austritt aus der Extrusionsvorrichtung regelmäßig mehrere Kühlstrecken, in denen beispielsweise durch eine Kühlflüssigkeit, wie Wasser, das Material des Gegenstands sukzessive bis zur Erkaltung und damit vollständigen Erstarrung abgekühlt wird. Beispielsweise nach Austritt aus der der Extrusionsvorrichtung unmittelbar nachfolgenden ersten Kühlstrecke kann die äußere Oberfläche des rohrförmigen Gegenstands bereits erstarrt sein, sodass die Formgebung der äußeren Oberfläche des rohrförmigen Gegenstands abgeschlossen ist. Im Inneren der Rohrwandung weist das Material des rohrförmigen Gegenstands hingegen noch rekristallisierende Bereiche und Schmelzeanteile auf und ist entsprechend zumindest teilweise noch fließfähig, wobei es im weiteren Verlauf der Abkühlung des Gegenstands bekanntlich neben einer Schrumpfung zu Sagging kommt. Zur endgültigen Formgebung des rohrförmigen Gegenstands in der ersten Kühlstrecke ist es möglich, dass in dieser beispielsweise durch Anlegen eines Vakuums das Gegenstandsmaterial an die zum Beispiel zylindrische Innenfläche einer Kalibrierhülse gepresst wird.

Grundsätzlich ist es zwar möglich, neben der Schrumpfung auch das zu erwartende Sagging ausgehend von exakt bekannten Rahmenbedingungen und Materialeigenschaften des rohrförmigen Gegenstands detailliert durch die Navier-Stokes-Gleichungen zu modellieren. Jedoch ist dies numerisch so aufwendig, dass dies für eine vorliegend gewünschte schnelle Vorhersage des Saggings nicht praktikabel ist. So soll erfindungsgemäß zur Vermeidung von Ausschuss möglichst frühzeitig nach Austritt aus der Extrusionsvorrichtung eine zuverlässige Vorhersage über das noch zu erwartende Sagging und damit die endgültige Form des Gegenstands vorliegen, so dass gegebenenfalls frühzeitig in den Produktionsprozess eingegriffen werden kann, zum Beispiel durch Anpassen der Einstellungen der Extrusionsvorrichtung. Bevorzugt soll die Vorhersage des Saggings dabei in Echtzeit erfolgen. Beides steht der Verwendung der an sich zuverlässigen Navier-Stokes-Gleichungen in diesem Anwendungsfall entgegen.

Anders als bei der Schrumpfung lässt sich das Sagging wie bereits erwähnt nicht in der in WO 2022/058081 A1 erläuterten Weise vorhersagen. Die Schrumpfung von der Extrusionstemperatur bis zur vollständigen Erkaltung ist von dem zeitlichen Ablauf der Erstarrung, insbesondere der Abkühlgeschwindigkeit unabhängig. Auch kann auf die Schrumpfung kein wesentlicher Einfluss durch eine Veränderung von Parametern zum Beispiel der Extrusionsvorrichtung oder der Kühlparameter genommen werden.

Es handelt sich im Wesentlichen um eine unveränderliche Prozesseigenschaft, die aber relativ einfach prognostiziert werden kann.

Anders ist dies beim Sagging, wo die Abläufe ungleich komplexer sind als bei der Schrumpfung. Beim Sagging spielt zunächst das temperaturabhängige Fließverhalten des Materials, seine Temperatur und die Geschwindigkeit der Abkühlung eine bedeutende Rolle. Allgemein kann festgehalten werden, dass ein Absacken der Schmelze während der Produktion von Rohren um so ausgeprägter sein wird, je höher die Anfangstemperatur der Schmelze ist und je mehr Zeit bis zur Abkühlung und vollständigen Erstarrung der Schmelze vergeht. Veränderliche Betriebsbedingungen bzgl. der Extrusionstemperatur, der Förderleistung des Extruders, der Abzugsgeschwindigkeit und der Intensität und Dauer der Kühlung beeinflussen den Grad des Saggings. Während für die Schrumpfungsvorhersage zum Beispiel mit Hilfe des Brechungsindex ein Anlagenstopp ausreicht, bei dem über mehrere Stunden des Abkühlens die Veränderung des Brechungsindex zusammen mit der schrumpfenden Wanddicke und dem Durchmesser aufgezeichnet werden, lässt sich mit dieser verlässlichen Methode nicht das Sagging prognostizieren, eben weil das Absacken der Wanddicke deutlich stärker oder schwächer ausfallen wird, wenn das Abkühlen über einen längeren oder kürzeren Zeitraum erfolgt. Auch kann das Sagging - anders als die Schrumpfung - durch Verändern der Parameter der Extrusionsvorrichtung und der Kühlparameter für den rohrförmigen Gegenstand entscheidend beeinflusst werden.

Der in der Extrusionsvorrichtung erzeugte rohrförmige Gegenstand wird während der Messung in einer Förderrichtung entlang seiner Längsachse gefördert. Bei dem rohrförmigen Gegenstand handelt es sich insbesondere um ein Rohr, beispielsweise ein Kunststoffrohr. Es kann sich auch um ein mehrschichtiges Rohr handeln. Bei dem rohrförmigen Gegenstand kann es sich auch um ein Kabel handeln, bei dem also der durch die Rohrform gebildete, in Längsrichtung verlaufende Hohlraum durch einen oder mehrere elektrische Leiter gefüllt ist. Erfindungsgemäß wird mit einer ersten Wanddickenmesseinrichtung mindestens eine Wand des rohrförmigen Gegenstands an einer in Förderrichtung stromauf zumindest einer Kühlstrecke für den rohrförmigen Gegenstand angeordneten ersten Messposition gemessen. Bekanntlich durchlaufen in Extrusionsvorrichtungen erzeugte Gegenstände eine oder mehrere Kühlstrecken, in denen wie erläutert der Gegenstand sukzessive abgekühlt wird, zum Beispiel durch Aufsprühen einer Kühlflüssigkeit. An der ersten Messposition besitzt der mit einer hohen Temperatur aus der Extrusionsvorrichtung austretende rohrförmige Gegenstand noch eine erhöhte Temperatur, sodass der Gegenstand insbesondere noch fließfähige Anteile, also Schmelzeanteile, aufweist.

Mit einer zweiten Wanddickenmesseinrichtung wird erfindungsgemäß die Wanddicke der mindestens einen Wand des rohrförmigen Gegenstands an einer in Förderrichtung stromab der ersten Messposition angeordneten zweiten Messposition gemessen. An der zweiten Messposition, die insbesondere stromab mindestens einer zwischen der ersten Messposition und der zweiten Messposition angeordneten Kühlstrecke angeordnet sein kann, ist die Temperatur des Gegenstands bereits abgekühlt, sodass dieser zumindest weniger noch fließfähige Anteile aufweist, vorzugsweise im Wesentlichen seinen Kaltzustand, also vollständig erstarrten Zustand, erreicht hat. Während die erste Wanddickenmesseinrichtung also einen Warmwert der Wanddicke misst, der sich im Zuge der weiteren Abkühlung regelmäßig noch verändert, kann die zweite Wanddickenmesseinrichtung den Kaltwert der Wanddicke und damit die endgültige Wanddicke des rohrförmigen Gegenstands messen.

Über eine Verzögerungsstufe, deren Verzögerungszeit der Förderzeit des Gegenstands zwischen der ersten und zweiten Messposition entspricht, werden die Wanddickenmesswerte der ersten Wanddickenmesseinrichtung an eine Auswerteeinrichtung gegeben. Die Auswerteeinrichtung erhält weiterhin Wanddickenmesswerte der zweiten Wanddickenmesseinrichtung, ohne die durch die Verzögerungsstufe erzeugte Verzögerung. Die Auswerteeinrichtung vergleicht die durch die Verzögerungsstufe verzögerten Wanddickenmesswerte der ersten Wanddickenmesseinrichtung mit den Wanddickenmesswerten der zweiten Wanddickenmesseinrichtung. Somit vergleicht die Auswerteeinrichtung Wanddickenmesswerte der ersten und zweiten Wanddickenmesseinrichtung miteinander, die aufgrund der relativen zeitlichen Verschiebung durch die Verzögerungsstufe an derselben Position in Förderrichtung des rohrförmigen Gegenstands gewonnen wurden. Es erfolgt also ein ortsgleicher Vergleich der Wanddickenmesswerte, aus dem präzise die tatsächlich erfolgte Veränderung der Wanddickenwerte zwischen der ersten und zweiten Messposition ermittelt werden kann. Selbstverständlich ist es möglich, dass darüber hinaus die Wanddickenmesswerte der ersten Wanddickenmesseinrichtung und die Wanddickenmesswerte der zweiten Wanddickenmesseinrichtung eine weitere Verzögerung durchlaufen, die dann jedoch für beide Wanddickenmesseinrichtungen identisch ist, sodass weiterhin ein ortsgleicher Vergleich der Wanddickenmesswerte erfolgt.

Auf Grundlage des durch die Auswerteeinrichtung durchgeführten Vergleichs überprüft die Auswerteeinrichtung das Verhältnis der an der Extrusionsvorrichtung eingestellten Austrittsweiten bzw. Wanddicken des extrudierten Materials an der Oberseite und an der Unterseite der Extrusionsdüse. Wie erläutert, wirkt sich Sagging insbesondere in einer Veränderung der Wanddicken an der Oberseite und der Unterseite des rohrförmigen Gegenstands aus, da die fließfähigen Anteile des Gegenstands im Zuge des Saggings schwerkraftbedingt nach unten absacken. Indem durch die erfindungsgemäße Wanddickenmessung und den ortsgleichen Vergleich der erhaltenen Wanddickenmesswerte zwischen der ersten und zweiten Messposition ein tatsächlich erfolgtes Sagging zuverlässig festgestellt werden kann, kann auf dieser Grundlage eine Einstellung der Extrusionsdüse, insbesondere der durch sie erzeugten Austrittsweiten des extrudierten Materials an der Oberseite und an der Unterseite, vorgenommen werden, die zu einer gewünschten Endgeometrie des rohrförmigen Gegenstands führt. Sofern an der zweiten Messposition bereits die endgültigen Kaltwerte der Wanddicke gemessen werden, kann die Extrusionsdüse beispielsweise so angesteuert werden, dass an dieser Stelle die Wanddicken an der Oberseite und an der Unterseite des rohrförmigen Gegenstands identisch sind. Sofern nachfolgend zu der zweiten Messposition noch weiteres Sagging erwartet wird, kann die Extrusionsdüse entsprechend so eingestellt werden, dass an der zweiten Messposition die Wanddicke an der Oberseite des rohrförmigen Gegenstands noch entsprechend größer ist als die Wanddicke an der Unterseite.

Damit wird erfindungsgemäß eine Warm-Kalt-Regelung der Extrusionsvorrichtung auf Grundlage realer Messwerte an der ersten und zweiten Messposition in einfacher Weise ermöglicht, insbesondere unter Berücksichtigung des Saggings. Durch den ortsgleichen Vergleich der Wanddickenmesswerte über die Verzögerungsstufe sind Verfälschungen der Ergebnisse aufgrund von Veränderungen des rohrförmigen Gegenstands entlang seiner Längsrichtung, beispielsweise im Rahmen eines Hochfahrens einer die Extrusionsvorrichtung umfassenden Produktionsanlage, ausgeschlossen. Die Verzögerungsstufe kann zum Beispiel in die Auswerteeinrichtung integriert sein. Sie kann durch eine Software oder Hardware realisiert sein, beispielsweise in Form eines Laufzeitspeichers oder eines Schieberegisters.

Zum Messen der Wanddicken an der ersten und zweiten Messposition können die ersten und zweiten Wanddickenmesseinrichtungen insbesondere Sender umfassen, die Messstrahlung aussenden, die den Gegenstand zumindest teilweise durchstrahlt. Hierbei kann es sich zum Beispiel um elektromagnetische Strahlung handeln, für die der Gegenstand zumindest teiltransparent ist. Die Strahlung wird an Grenzflächen des Gegenstands, insbesondere Grenzflächen der Wände des Gegenstands, reflektiert. Hieraus kann beispielsweise durch Laufzeitauswertungen die jeweilige Wanddicke bestimmt werden.

Nach einer Ausgestaltung kann die erste Messposition stromab einer ersten Kühlstrecke und stromauf mindestens einer weiteren Kühlstrecke für den rohrförmigen Gegenstand angeordnet sein und die zweite Messposition kann stromab sämtlicher Kühlstrecken für den rohrförmigen Gegenstand angeordnet sein. Die erste Messposition kann insbesondere stromab lediglich einer Kühlstrecke und stromauf einer Mehrzahl weiterer Kühlstrecken angeordnet sein. An der ersten Messposition weist der rohrförmige Gegenstand bereits eine teilweise definierte Form auf. Gleichzeitig weist der Gegenstand noch fließfähige Anteile auf, die im Verlauf der weiteren Abkühlung Sagging unterliegen. An der zweiten Messposition ist der Gegenstand bei der vorgenannten Ausgestaltung dagegen im Wesentlichen vollständig erstarrt.

Nach einer weiteren Ausgestaltung kann vorgesehen sein, dass die erste Wanddickenmesseinrichtung an der ersten Messposition die Wanddicke an mindestens einem Messort an der Oberseite und an mindestens einem Messort an der Unterseite des rohrförmigen Gegenstands misst, und dass die zweite Wanddickenmesseinrichtung an der zweiten Messposition die Wanddicke an mindestens einem Messort an der Oberseite und an mindestens einem Messort an der Unterseite des rohrförmigen Gegenstands misst. Die Wanddickenmessung an der Oberseite des rohrförmigen Gegenstands kann zum Beispiel am höchsten Punkt des Gegenstands erfolgen. Die Messung an der Unterseite kann entsprechend am niedrigsten Punkt des Gegenstands erfolgen. Insbesondere für das vorstehend erläuterte Berücksichtigen von Sagging ist das Messen und Vergleichen der Wanddicken an der Oberseite und Unterseite des rohrförmigen Gegenstands zwischen der ersten und zweiten Messposition bedeutend, da sich Sagging insbesondere in einer Wanddickenveränderung zwischen der Oberseite und der Unterseite bemerkbar macht.

Die Auswerteeinrichtung kann weiter dazu ausgebildet sein, bei dem Vergleich der Wanddickenmesswerte einen Sagging-Faktor zu berücksichtigen, der ein erwartetes Sagging des rohrförmigen Gegenstands zwischen der ersten Messposition und der zweiten Messposition angibt. Insbesondere kann die Auswerteeinrichtung dazu ausgebildet sein, den Sagging-Faktor anhand des Vergleichs der Wanddickenmesswerte zu überprüfen und gegebenenfalls anzupassen. Weiterhin kann die Auswerteeinrichtung dazu ausgebildet sein, anhand des Vergleichs der Wanddickenmesswerte das tatsächliche Sagging des rohrförmigen Gegenstands zwischen der ersten Messposition und der zweiten Messposition mit dem insbesondere nach dem Sagging-Faktor erwarteten Sagging zwischen der ersten Messposition und der zweiten Messposition zu vergleichen.

Der Sagging-Faktor gibt den Grad des zu erwarteten Saggings an. Je größer der Sagging-Faktor, desto stärkeres Sagging ist zu erwarten. Die Volumen- oder Massefließrate des noch fließfähigen viskosen Materials des Gegenstands ist etwa proportional zu dem Sagging-Faktor. Der Sagging-Faktor stellt an der jeweiligen Messposition somit einen Indikator dar, aus dem abgeleitet werden kann, in welchem Umfang im weiteren Verlauf der Extrusionslinie sich die regelmäßig bewusst eingestellte Differenz der aus der Extrusionsdüse austretenden Wanddicken im oberen und unteren Bereich noch verändern wird. Auf Grundlage des Sagging-Faktors kann durch Einstellung des Ringspalts der Extrusionsdüse und/oder geeignete Temperatureinstellung der Extrusionsdüse der Extrusionsvorrichtung erreicht werden, dass sich mit dem noch verbleibenden Sagging die gewünschte, in der Regel gleichförmige Wanddicke des Gegenstands über den gesamten Umfang ergibt. Wie nachstehend noch näher erläutert werden wird, ist es erfindungsgemäß auch möglich, dass durch die erste und/oder zweite Wanddickenmesseinrichtung der Brechungsindex des Gegenstands an der ersten bzw. zweiten Messposition gemessen wird. Der Sagging-Faktor kann auch als Produkt aus einem konstanten Faktor mit der Brechungsindexdifferenz zwischen dem an der ersten Messposition gemessenen Brechungsindex und dem Kaltwert des Brechungsindex beschrieben werden. Der Kaltwert des Brechungsindex kann insbesondere an der zweiten Messposition vorliegen. Der Brechungsindex ist bekanntlich temperaturabhängig, sodass er sich zwischen der ersten Messposition und der zweiten Messposition regelmäßig verändert. Der Sagging-Faktor kann zunächst zum Beispiel empirisch ermittelt werden. Sofern sich durch die erfindungsgemäßen Messungen zeigt, dass der ermittelte Sagging-Faktor für den jeweiligen Produktionsvorgang oder die Produktionsanlage nicht zutrifft, kann dieser entsprechend angepasst werden. Die Auswerteeinrichtung kann weiterhin dazu ausgebildet sein, für den Vergleich des tatsächlichen Saggings mit dem erwarteten Sagging ein Verhältnis der Wanddicken an der Oberseite und an der Unterseite des rohrförmigen Gegenstands an der ersten Messposition mit einem Verhältnis der Wanddicken an der Oberseite und an der Unterseite des rohrförmigen Gegenstands an der zweiten Messposition zu vergleichen.

Weiter kann vorgesehen sein, dass die Auswerteeinrichtung dazu ausgebildet ist, bei Feststellen einer Abweichung zwischen dem tatsächlichen und dem erwarteten Sagging den Sagging-Faktor anzupassen und/oder ein sich für eine gewünschte Wanddickengeometrie des rohrförmigen Gegenstands ergebendes Soll-Verhältnis der Austrittsweiten des extrudierten Materials an der Oberseite und an der Unterseite der Extrusionsdüse anzuzeigen und/oder durch Ansteuern der Extrusionsvorrichtung einzustellen.

Das Einstellen der Austrittsweiten bzw. Wanddicken des extrudierten Materials an der Oberseite und an der Unterseite der Extrusionsdüse kann wie erläutert durch mechanisches Einstellen des Austrittsspalts an der Oberseite bzw. an der Unterseite der Extrusionsdüse erfolgen. Es ist alternativ oder zusätzlich auch möglich, auf die Austrittsweiten Einfluss zu nehmen durch eine Ansteuerung der Temperatur der Extrusionsdüse, insbesondere eine unterschiedliche Temperatur an der Oberseite und der Unterseite der Extrusionsdüse.

In besonders praxisgemäßer Weise kann die erste und/oder die zweite Wanddickenmesseinrichtung eine Terahertz-Messeinrichtung oder eine Röntgenmesseinrichtung umfassen. Mit Terahertz-Messeinrichtungen wird Terahertz-Strahlung beispielsweise in einem Wellenlängenbereich von 1 GHz bis 6 THz auf dem rohrförmigen Gegenstand ausgesandt. Ähnlich wie Röntgenstrahlung kann diese Strahlung den Gegenstand durchdringen, insbesondere wenn dieser - wie bei rohrförmigen Gegenständen oder Kabeln üblich - ein Kunststoffmaterial umfasst. Die vorgenannten Messeinrichtungen, die insbesondere keine optische Strahlung, wie Laserstrahlung oder dergleichen verwenden, eignen sich besonders für schwierige Produktionsbedingungen im Rahmen von Extrusionslinien, bei denen es häufig zu Dampfbildung oder Verschmutzungen kommt, die eine optische Messung stören können. Bei Röntgenmesseinrichtungen ist anzumerken, dass diese zum Beispiel für eine obere und untere Wanddickenmessung Röntgenstrahlung in horizontaler Richtung auf den Gegenstand aussenden müssen.

Gemäß einer weiteren Ausgestaltung kann die erste und/oder zweite Wanddickenmesseinrichtung eine tragbare Handheld-Messeinrichtung sein. Es handelt sich somit um eine durch eine Bedienperson tragbare Messeinrichtung, die flexibel und bei Bedarf an der ersten und/oder zweiten Messposition eingesetzt werden kann. Insbesondere beim Einsatz einer tragbaren Wanddickenmesseinrichtung ist es nach einer weiteren Ausstattung möglich, dass die erste und die zweite Wanddickenmesseinrichtung durch dieselbe Wanddickenmesseinrichtung gebildet sind. In diesem Fall könnte beispielsweise zuerst an der ersten Messposition die Wanddicke gemessen werden und anschließend an der zweiten Messposition. Die jeweilig erhaltenen Wanddickenmesswerte können dann ortsgleich miteinander verglichen werden, indem die an der ersten Messposition gewonnenen Wanddickenmesswerte über die Verzögerungsstufe entsprechend der Fördergeschwindigkeit des rohrförmigen Gegenstands verzögert werden. Bei dieser Ausgestaltung ist vorteilhaft nur eine Wanddickenmesseinrichtung erforderlich.

Um eine definierte Messausrichtung an der ersten und/oder zweiten Messposition sicher zu gewährleisten, ist es nach einer weiteren Ausgestaltung möglich, dass an der ersten Messposition und/oder an der zweiten Messposition eine Halterung für die erste und/oder die zweite Wanddickenmesseinrichtung angeordnet ist. In der Halterung kann die erste und/oder die zweite Wanddickenmesseinrichtung lösbar gehalten werden. Dies ist insbesondere vorteilhaft im Zusammenhang mit tragbaren Wanddickenmesseinrichtungen.

Nach einer weiteren Ausgestaltung kann vorgesehen sei, dass die Auswerteeinrichtung weiter dazu ausgebildet ist, aus den erhaltenen Wanddickenmesswerten der ersten Wanddickenmesseinrichtung und den erhaltenen Wanddickenmesswerten der zweiten Wanddickenmesseinrichtung den Brechungsindex des Materials des rohrförmigen Gegenstands an der ersten Messposition und an der zweiten Messposition zu bestimmen.

Wie bereits erläutert, ist der Brechungsindex temperaturabhängig und verändert sich daher regelmäßig zwischen der ersten und zweiten Messposition. Insbesondere bei den beispielhaft vorgenannten Wanddickenmesseinrichtungen wird zunächst die optische Wanddicke gemessen, die anhand des Brechungsindex in die geometrische Wanddicke umgerechnet werden kann. Für die Bestimmung der geometrischen Wanddicken ist entsprechend Kenntnis des Brechungsindex des Materials von großer Bedeutung. Der Brechungsindex ist dabei nicht nur temperaturabhängig, sondern verändert sich auch beispielsweise mit einem wechselnden Anteil von dem zu extrudierenden Kunststoff üblicherweise zugemischten Additiven, wobei der genaue Anteil der Additive oftmals nicht präzise bekannt ist und der Anteil der Additive außerdem schwanken kann. Der erfindungsgemäß bestimmte Brechungsindex kann entsprechend bei der Wanddickenbestimmung an der ersten und/oder der zweiten Messposition berücksichtigt werden. Auch der Sagging-Faktor kann auf dieser Grundlage überprüft werden, insbesondere aufgrund des vorstehend erläuterten Zusammenhangs zwischen dem Sagging-Faktor und der Brechungsindexdifferenz zwischen der ersten Messposition und dem Kaltwert des Brechungsindex, insbesondere an der zweiten Messposition.

Für das Bestimmen des Brechungsindex kann die erste und/oder zweite Wanddickenmesseinrichtung weiterhin einen Reflektor aufweisen, der beispielsweise Terahertz-Messstrahlung reflektiert. Eine Terahertz-Wanddickenmesseinrichtung kann einen Terahertz-Transceiver umfassen, in den ein Terahertz-Sender und ein Terahertz-Empfänger integriert sind. Beispielsweise kann der Brechungsindex aus einem Vergleich der Laufzeit von durch eine Messeinrichtung ausgesandter Messstrahlung ohne in dem Strahlengang der Messstrahlung angeordnetem rohrförmigem Gegenstand mit der Laufzeit der Messstrahlung mit in dem Strahlengang der Messstrahlung angeordnetem rohrförmigem Gegenstand bestimmt werden. Diese Vorgehensweise zum Bestimmen eines unbekannten Brechungsindex eines Gegenstands ist zum Beispiel in der EP 3 265 748 B1 beschrieben. Die Brechungsindexbestimmung kann vorliegend in entsprechender Weise erfolgen. Es ist jedoch auch möglich, den Brechungsindex zu bestimmen, indem mit einer Messeinrichtung die optische Wanddicke des rohrförmigen Gegenstands bestimmt wird, weiter indem mit der Messeinrichtung ein Außendurchmesser und ein Innendurchmesser des rohrförmigen Gegenstands bestimmt wird, und indem aus einem Vergleich der bestimmten Außen- und Innendurchmesser mit der bestimmten optischen Wanddicke der Brechungsindex des rohrförmigen Gegenstands bestimmt wird. Diese alternative Art zur Bestimmung eines unbekannten Brechungsindex ist beispielsweise in der DE 10 2018 128 248 A1 beschrieben. Wiederum kann diese Vorgehensweise vorliegend zur Anwendung kommen.

Nach einer weiteren Ausgestaltung kann vorgesehen sein, dass die Auswerteeinrichtung dazu ausgebildet ist, bei der Überprüfung der Einstellung der Extrusionsvorrichtung Materialparameter des rohrförmigen Gegenstands, insbesondere die Wärmeleitfähigkeit und/oder die Wärmekapazität, und/oder Produktionsparameter, insbesondere die Temperatur der Extrusionsdüse und/oder die Abzugsgeschwindigkeit der Extrusionsvorrichtung und/oder Abkühlparameter des erzeugten rohrförmigen Gegenstands, zu berücksichtigen. Es können insbesondere Veränderungen der vorgenannten Material- und/oder Produktionsparameter berücksichtigt werden. Die erläuterten Material- bzw. Produktionsparameter haben insbesondere Einfluss auf das Sagging und den Sagging- Faktor.

Die erfindungsgemäße Vorrichtung kann weiterhin die Extrusionsvorrichtung und/oder die mindestens eine Kühlstrecke und/oder eine Fördereinrichtung zum Fördern des rohrförmigen Gegenstands entlang der Förderrichtung und/oder den rohrförmigen Gegenstand umfassen.

Die erfindungsgemäße Vorrichtung kann zur Durchführung des erfindungsgemäßen Verfahrens geeignet sein. Entsprechend kann das Verfahren mit einer erfindungsgemäßen Vorrichtung durchgeführt werden.

Ein Ausführungsbeispiel der Erfindung wird nachfolgend anhand von Figuren näher erläutert. Es zeigen schematisch:
- Figur 1: eine erfindungsgemäße Vorrichtung in einer schematischen Seitenansicht,
- Figur 2: eine geschnittene Teildarstellung der Vorrichtung aus Fig. 1.

Soweit nichts anders angegeben ist, bezeichnen in den Figuren gleiche Bezugszeichen gleiche Gegenstände.

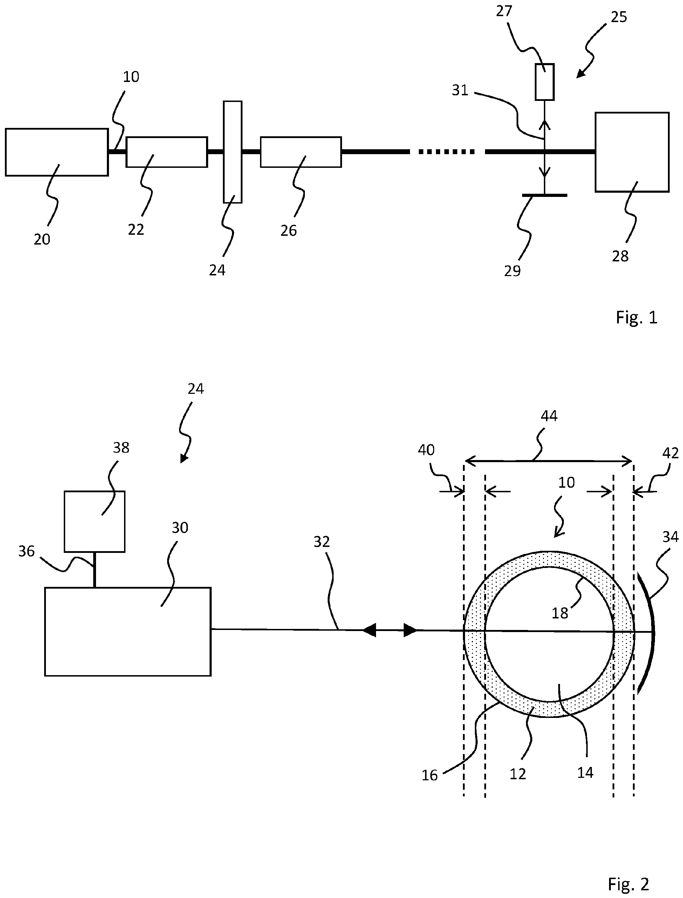

In den Figuren 1 und 2 ist ein rohrförmiger Gegenstand 10, vorliegend ein Rohr 10, insbesondere ein Kunststoffrohr 10, dargestellt, welches eine Wand 12, einen durch das Rohr 10 begrenzten Hohlraum 14, eine im Querschnitt kreisförmige äußere Oberfläche 16 und eine im Querschnitt ebenfalls kreisförmige innere Oberfläche 18 besitzt, die den Hohlraum 14 begrenzt. Das Rohr 10 wird im vorliegenden Beispiel mit Hilfe eines Extruders in einer Extrusionsvorrichtung 20 extrudiert und mittels einer geeigneten Fördereinrichtung entlang seiner Längsachse gefördert, in Figur 1 von links nach rechts. Nach Austritt aus der zum Beispiel ringförmigen Extrusionsdüse der Extrusionsvorrichtung 20 durchläuft das Rohr 10 zunächst eine erste Kühlstrecke 22, in der das Rohr 10, welches stark erhitzt und noch nicht vollständig verfestigt, also noch rekristallisierende und fließfähige Anteile (Schmelze) aufweisend, aus der Extrusionsdüse austritt, abgekühlt wird. Die erste Kühlstrecke 22 kann eine Kalibriereinrichtung, insbesondere eine Kalibrierhülse umfassen, gegen die das Rohr 10 zum Beispiel durch ein Vakuum und den Normaldruck im Inneren des Rohrs 10 gepresst wird. Dadurch wird der durch die Extrusionsdüse vorgeformte Außendurchmesser des Rohrs 10 endgültig festgelegt. Im weiteren Verlauf durchläuft das Rohr 10 eine erste Wanddickenmesseinrichtung 24, vorliegend eine Terahertz-Messeinrichtung 24, in der in nachfolgend näher erläuterter Weise der Brechungsindex und die Wanddicke bestimmt werden. Nachfolgend zu der ersten Terahertz-Messrichtung 24 durchläuft das Rohr 10 mindestens eine weitere Kühlstrecke 26, in der eine weitere Abkühlung erfolgt. Durch die Strichelung des Rohrs 10 ist veranschaulicht, dass weitere Kühlstrecken 26 vorgesehen sein können. Nach vollständiger Verfestigung des Rohrs 10 wird dieses in einer zum Beispiel eine fliegende Säge aufweisenden Ablängeinrichtung 28 auf vorgegebene Abschnitte abgelängt.

Anhand Figur 2 sollen der Aufbau und die Funktion der ersten Terahertz-Messeinrichtung 24 näher erläutert werden. Die erste Terahertz-Messeinrichtung 24 umfasst in dem dargestellten Beispiel einen Transceiver 30, in dem ein Sender und ein Detektor für Terahertzstrahlung kombiniert sind. Der Sender sendet Terahertz-strahlung 32 auf das Rohr 10 aus. Die Terahertzstrahlung wird an unterschiedlichen Grenzflächen des Rohrs 10 und an einem dem Transceiver 30 gegenüberliegend angeordneten Reflektor 34 reflektiert und gelangt zurück zu dem Transceiver 30, wo sie durch den Detektor detektiert wird. Der Transceiver 30 ist weiterhin über eine Leitung 36 mit einer Auswerteeinrichtung 38 verbunden. Die von dem Detektor empfangene reflektierte Strahlung erzeugt entsprechende Messsignale, die über die Leitung 36 an die Auswerteeinrichtung 38 weitergegeben werden. Die Auswerteeinrichtung 38 kann auf diese Weise zum Beispiel die in Figur 2 eingezeichneten Wanddicken 40, 42 bestimmen, zum Beispiel anhand von Laufzeitmessungen. Auch kann die Auswerteeinrichtung 38 auf Grundlage der von dem Detektor empfangenen Messsignale den Brechungsindex des Rohrmaterials bestimmen, wie dies beispielsweise in der WO 2016/139155 A1 oder DE 10 2018 128 248 A1 beschrieben ist.

Mit der ersten Terahertz-Messeinrichtung 24 werden zum Beispiel die Wanddicken 40, 42 des Rohrs 10 sowie der Brechungsindex an der in Figur 1 gezeigten ersten Messposition bestimmt, an dem das Rohr 10 noch nicht vollständig verfestigt ist, also noch fließfähige Anteile aufweist. Dabei kann der Transceiver 30 beispielsweise entlang einer Kreisbahn um das Rohr 10 rotieren und so die Wanddicke und den Brechungsindex an verschiedenen Orten über den Umfang des Rohrs 10 bestimmen. Der Reflektor 34 kann ebenfalls um das Rohr 10 rotieren. Es ist aber auch möglich, dass auf den Reflektor 34 verzichtet wird.

Zwischen der mindestens einen weiteren Kühlstrecke 26, insbesondere der letzten Kühlstrecke 26, und der Ablängvorrichtung 28 befindet sich eine zweite Wanddickenmesseinrichtung 25, vorliegend ebenfalls eine Terahertz- Messeinrichtung 25. Die zweite Terahertz-Messrichtung 25 umfasst ebenfalls einen Transceiver 27, in dem ein Sender und ein Detektor für Terahertz-Strahlung kombiniert sind. Auf einer gegenüberliegenden Seite des Rohrs 10 ist wiederum ein Reflektor 29 für Terahertz-Strahlung angeordnet. Dieser reflektiert von dem Sender ausgesandte Terahertz-Strahlung 31 nach Durchstrahlen des Rohrs 10 und Reflexionen an Grenzflächen des Rohrs 10 zurück zu dem Detektor.

Die zweite Terahertz-Messeinrichtung 25 misst an der zweiten Messposition, an der das Rohr 10 im Wesentlichen vollständig erstarrt ist, den Brechungsindex sowie zumindest die Wanddicke des Rohrs 10 zumindest an der Oberseite und der Unterseite des Rohrs 10. Die zweite Terahertz-Messeinrichtung kann dabei in der oben zur ersten Terahertz-Messrichtung erläuterten Weise arbeiten. Beispielsweise die zweite Terahertz-Messrichtung 25 kann eine tragbare Handheld-Messeinrichtung sein. In diesem Fall kann an der zweiten Messposition eine Halterung für die zweite Terahertz-Messeinrichtung 25 vorgesehen sein, in die diese lösbar eingesetzt werden kann. Die Messung der Wanddicken bzw. des Brechungsindex kann in der oben erläuterten Weise erfolgen. Auch die Messergebnisse der zweiten Terahertz-Messrichtung 25 liegen an der Auswerteeinrichtung 38 an.

Die Auswerteeinrichtung 38 umfasst weiterhin eine Verzögerungsstufe, deren Verzögerungszeit der Förderzeit des Rohrs 10 zwischen der ersten Messposition und der zweiten Messposition entspricht. Die Messwerte der ersten Terahertz-Messeinrichtung 24 werden durch die Verzögerungsstufe gegenüber den Messwerten der zweiten Terahertz-Messeinrichtung 25 durch die Verzögerungsstufe verzögert. Die Auswerteeinrichtung 38 vergleicht die durch die Verzögerungsstufe verzögerten Messwerte der ersten Terahertz-Messeinrichtung 24 mit den Messwerten der zweiten Terahertz-Messeinrichtung 25, sodass am selben Ort des Gegenstands 10 gewonnene Messwerte miteinander verglichen werden. Anhand des Vergleichs der Messwerte, insbesondere der an der Oberseite und der Unterseite des Rohrs 10 gewonnenen Wanddicken-Messwerte an der ersten und der zweiten Messposition wird ein beispielsweise empirisch ermittelter Sagging-Faktor überprüft, der ein erwartetes Sagging zwischen der ersten Messposition und der zweiten Messposition angibt. Dazu kann die Auswerteeinrichtung 38 ein Verhältnis der Wanddicken an der Oberseite und an der Unterseite des Rohrs 10 an der ersten Messposition mit einem Verhältnis der Wanddicken an der Oberseite und an der Unterseite des Rohrs 10 an der zweiten Messposition vergleichen. Wird eine Abweichung gegenüber dem durch den Sagging-Faktor angezeigten erwarteten Sagging erkannt, kann dies durch die Auswerteeinrichtung 38 zum Beispiel für eine Bedienperson angezeigt werden und/oder der Sagging-Faktor kann entsprechend korrigiert werden. Auch kann die Auswerteeinrichtung 38 die Extrusionsvorrichtung 20 ansteuern, um die Austrittsweiten bzw. Wanddicken des extrudierten Materials an der Oberseite und an der Unterseite der Extrusionsdüse so anzupassen, dass an der zweiten Messposition ein gewünschtes Verhältnis der Wanddicken an der Oberseite und an der Unterseite des Rohrs 10 erreicht wird. Zum Einstellen der Austrittsweiten kann zum Beispiel eine mechanische Verstellung eines Ringspalts der Extrusionsdüse und/oder eine Anpassung der Temperatur der Extrusionsdüse der Extrusionsvorrichtung 20 erfolgen. Anhand des ebenfalls bestimmten Brechungsindex an der ersten Messposition und an der zweiten Messposition kann der Sagging-Faktor ebenfalls überprüft werden. Außerdem kann auf Grundlage der Brechungsindexbestimmung die geometrische Wanddicke an der ersten und zweiten Messposition bestimmt werden.

### Bezugszeichenliste

- 10: rohrförmiger Gegenstand
- 12: Wand
- 14: Hohlraum
- 16: äußere Oberfläche
- 18: innere Oberfläche
- 20: Extrusionsvorrichtung
- 22: Kühlstrecke
- 24: erste Terahertz-Messeinrichtung (erste Wanddickenmesseinrichtung)
- 25: zweite Terahertz-Messeinrichtung (zweite Wanddickenmesseinrichtung)
- 26: Kühlstecke
- 27: Transceiver
- 28: Ablängeinrichtung
- 29: Reflektor
- 30: Transceiver
- 31: Terahertzstrahlung
- 32: Terahertzstrahlung
- 34: Reflektor
- 36: Leitung
- 38: Auswerteeinrichtung
- 40,42: Wanddicken

## Patentansprüche

1. Vorrichtung zum Überprüfen der Einstellung einer einen in einer Förderrichtung geförderten rohrförmigen Gegenstand (10) erzeugenden Extrusionsvorrichtung (20), wobei die Extrusionsvorrichtung (20) so eingestellt ist, dass extrudiertes Material mit unterschiedlichen Austrittsweiten an einer Oberseite und an einer Unterseite einer Extrusionsdüse der Extrusionsvorrichtung (20) austritt, umfassend:
• eine erste Wanddickenmesseinrichtung (24) zum Messen der Wanddicke (40, 42) mindestens einer Wand des rohrförmigen Gegenstands (10) an einer in Förderrichtung stromauf zumindest einer Kühlstrecke (26) für den rohrförmigen Gegenstand (10) angeordneten ersten Messposition,
• eine zweite Wanddickenmesseinrichtung (25) zum Messen der Wanddicke (40, 42) der mindestens einen Wand des rohrförmigen Gegenstands (10) an einer in Förderrichtung stromab der ersten Messposition angeordneten zweiten Messposition,
• eine Auswerteeinrichtung (38), an der Wanddickenmesswerte der ersten Wanddickenmesseinrichtung (24) und Wanddickenmesswerte der zweiten Wanddickenmesseinrichtung (25) anliegen, wobei die Wanddickenmesswerte der ersten Wanddickenmesseinrichtung (24) gegenüber den Wanddickenmesswerten der zweiten Wanddickenmesseinrichtung (25) durch eine Verzögerungsstufe der Vorrichtung verzögert sind, deren Verzögerungszeit der Förderzeit des Gegenstands (10) zwischen der ersten und zweiten Messposition entspricht,
• wobei die Auswerteeinrichtung (38) dazu ausgebildet ist, das Verhältnis der an der Extrusionsvorrichtung (20) eingestellten Austrittsweiten des extrudierten Materials an der Oberseite und an der Unterseite der Extrusionsdüse anhand eines Vergleichs der durch die Verzögerungsstufe verzögerten Wanddickenmesswerte der ersten Wanddickenmesseinrichtung (24) mit den Wanddickenmesswerten der zweiten Wanddickenmesseinrichtung (25) zu überprüfen.

2. Vorrichtung nach Anspruch 1, **dadurch gekennzeichnet, dass** die erste Messposition stromab einer ersten Kühlstrecke (22) und stromauf mindestens einer weiteren Kühlstrecke (26) für den rohrförmigen Gegenstand (10) angeordnet ist, und dass die zweite Messposition stromab sämtlicher Kühlstrecken (22, 26) für den rohrförmigen Gegenstand (10) angeordnet ist.

3. Vorrichtung nach einem der vorhergehenden Ansprüche, **dadurch gekennzeichnet, dass** die erste Wanddickenmesseinrichtung (24) an der ersten Messposition die Wanddicke (40, 42) an mindestens einem Messort an der Oberseite und an mindestens einem Messort an der Unterseite des rohrförmigen Gegenstands (10) misst, und dass die zweite Wanddickenmesseinrichtung (25) an der zweiten Messposition die Wanddicke (40, 42) an mindestens einem Messort an der Oberseite und an mindestens einem Messort an der Unterseite des rohrförmigen Gegenstands (10) misst.

4. Vorrichtung nach Anspruch 3, **dadurch gekennzeichnet, dass** die Auswerteeinrichtung (38) dazu ausgebildet ist, bei dem Vergleich der Wanddickenmesswerte einen Sagging-Faktor zu berücksichtigen, der ein erwartetes Sagging des rohrförmigen Gegenstands (10) zwischen der ersten Messposition und der zweiten Messposition angibt.

5. Vorrichtung nach Anspruch 4, **dadurch gekennzeichnet, dass** die Auswerteeinrichtung (38) dazu ausgebildet ist, den Sagging-Faktor anhand des Vergleichs der Wanddickenmesswerte zu überprüfen und gegebenenfalls anzupassen.

6. Vorrichtung nach Anspruch 5, **dadurch gekennzeichnet, dass** die Auswerteeinrichtung (38) dazu ausgebildet ist, anhand des Vergleichs der Wanddickenmesswerte das tatsächliche Sagging des rohrförmigen Gegenstands (10) zwischen der ersten Messposition und der zweiten Messposition mit dem erwarteten Sagging zwischen der ersten Messposition und der zweiten Messposition zu vergleichen.

7. Vorrichtung nach Anspruch 6, **dadurch gekennzeichnet, dass** die Auswerteeinrichtung (38) dazu ausgebildet ist, für den Vergleich des tatsächlichen Saggings mit dem erwarteten Sagging ein Verhältnis der Wanddicken (40, 42) an der Oberseite und an der Unterseite des rohrförmigen Gegenstands (10) an der ersten Messposition mit einem Verhältnis der Wanddicken an der Oberseite und an der Unterseite des rohrförmigen Gegenstands (10) an der zweiten Messposition zu vergleichen.

8. Vorrichtung nach einem der Ansprüche 6 oder 7, **dadurch gekennzeichnet, dass** die Auswerteeinrichtung (38) dazu ausgebildet ist, bei Feststellen einer Abweichung zwischen dem tatsächlichen und dem erwarteten Sagging den Sagging-Faktor anzupassen und/oder ein sich für eine gewünschte Wanddickengeometrie des rohrförmigen Gegenstands (10) ergebendes Soll-Verhältnis der Austrittsweiten des extrudierten Materials an der Oberseite und an der Unterseite der Extrusionsdüse anzuzeigen und/oder durch Ansteuern der Extrusionsvorrichtung (20) einzustellen.

9. Vorrichtung nach einem der vorhergehenden Ansprüche, **dadurch gekennzeichnet, dass** die erste und/oder die zweite Wanddickenmesseinrichtung (24, 25) eine Terahertz-Messeinrichtung (24, 25) oder eine Röntgenmesseinrichtung umfasst.

10. Vorrichtung nach einem der vorhergehenden Ansprüche, **dadurch gekennzeichnet, dass** die erste und/oder zweite Wanddickenmesseinrichtung (24, 25) eine tragbare Handheld-Messeinrichtung ist.

11. Vorrichtung nach Anspruch 10, **dadurch gekennzeichnet, dass** die erste und die zweite Wanddickenmesseinrichtung (24, 25) durch dieselbe Wanddickenmesseinrichtung gebildet sind.

12. Vorrichtung nach einem der Ansprüche 10 oder 11, dass an der ersten Messposition und/oder an der zweiten Messposition eine Halterung für die erste und/oder die zweite Wanddickenmesseinrichtung (24, 25) angeordnet ist.

13. Vorrichtung nach einem der vorhergehenden Ansprüche, **dadurch gekennzeichnet, dass** die Auswerteeinrichtung (38) weiterhin dazu ausgebildet ist, aus den erhaltenen Wanddickenmesswerten der ersten Wanddickenmesseinrichtung (24) und den erhaltenen Wanddickenmesswerten der zweiten Wanddickenmesseinrichtung (25) den Brechungsindex des Materials des rohrförmigen Gegenstands (10) an der ersten Messposition und an der zweiten Messposition zu bestimmen.

14. Vorrichtung nach einem der vorhergehenden Ansprüche, **dadurch gekennzeichnet, dass** die Auswerteeinrichtung (38) dazu ausgebildet ist, bei der Überprüfung der Einstellung der Extrusionsvorrichtung (20) Materialparameter des rohrförmigen Gegenstands (10), insbesondere die Wärmeleitfähigkeit und/oder die Wärmekapazität, und/oder Produktionsparameter, insbesondere die Temperatur der Extrusionsdüse und/oder die Abzugsgeschwindigkeit der Extrusionsvorrichtung (20) und/oder Abkühlparameter des erzeugten rohrförmigen Gegenstands (10), zu berücksichtigen.

15. Vorrichtung nach einem der vorhergehenden Ansprüche, **dadurch gekennzeichnet, dass** sie weiterhin die Extrusionsvorrichtung (20) und/oder die mindestens eine Kühlstrecke (22, 26) und/oder eine Fördereinrichtung zum Fördern des rohrförmigen Gegenstands (10) entlang der Förderrichtung und/oder den rohrförmigen Gegenstand (10) umfasst.

16. Verfahren zum Überprüfen der Einstellung einer einen in einer Förderrichtung geförderten rohrförmigen Gegenstand (10) erzeugenden Extrusionsvorrichtung (20), wobei die Extrusionsvorrichtung (20) so eingestellt ist, dass extrudiertes Material mit unterschiedlichen Austrittsweiten an einer Oberseite und an einer Unterseite einer Extrusionsdüse der Extrusionsvorrichtung (20) austritt, unter Verwendung einer Vorrichtung nach einem der vorhergehenden Ansprüche.
